# EUROPEAN PATENT APPLICATION

(11) **EP 4 254 054 A1**
(43) Date of publication of application: **04.10.2023**
(21) Application number: 23165961.6
(22) Date of filing: 31.03.2023
(51) Int. Cl.: G02F 1/03, G02F 1/09, B22F 10/28, B22F 10/322, B22F 10/36, B22F 10/366, B22F 12/41, B22F 12/44, B22F 12/45, B22F 12/70, B23K 26/06, B23K 26/064, B23K 26/082, B23K 26/12, B23K 26/342, B29C 64/153, B29C 64/268, B33Y 10/00, B33Y 30/00, B33Y 50/02

(54) **METHOD OF OPERATING AN IRRADIATION SYSTEM, IRRADIATION SYSTEM AND APPARATUS FOR PRODUCING A THREE-DIMENSIONAL WORK PIECE**

(30) Priority: 01.04.2022 WO PCT/EP2022/058772
(71) Applicant: SLM Solutions Group AG, 23560 Lübeck (DE)
(72) Inventor: Stengel, Christopher, 23560 Lübeck (DE); Schniedenharn, Max, 23560 Lübeck (DE); Krol, Toni Adam, 23560 Lübeck (DE)
(74) Representative: Schott, Jakob Valentin

(57) **Abstract**

Disclosed is an irradiation system for irradiating layers of a raw material powder with laser radiation to produce a three-dimensional work piece, the irradiation system comprising an optical unit configured to receive laser radiation having a first polarization state and to output laser radiation having a second polarization state, wherein the irradiation system is configured to selectively irradiate, with the laser radiation having the second polarization state, at least a section of a raw material powder layer applied onto a carrier, wherein the optical unit comprises an optical medium and is configured to define the second polarization state based on an electric field and/or a magnetic field through the optical medium. An apparatus and a method are also disclosed.

## Description

The present disclosure provides for a method of operating an irradiation system for irradiating layers of a raw material powder with laser radiation to produce a three-dimensional work piece. Further, an irradiation system of this kind is disclosed. Finally, an apparatus for producing a three-dimensional work piece is disclosed.

Powder bed fusion is an additive layering process by which pulverulent, in particular metallic and/or ceramic raw materials can be processed to three-dimensional work pieces of complex shapes. To that end, a raw material powder layer is applied onto a carrier and subjected to laser radiation in a site selective manner in dependence on the desired geometry of the work piece that is to be produced. The laser radiation penetrating into the powder layer causes heating and consequently melting or sintering of the raw material powder particles. Further raw material powder layers are then applied successively to the layer on the carrier that has already been subjected to laser treatment, until the work piece has the desired shape and size. Powder bed fusion may be employed for the production or repairing of prototypes, tools, replacement parts, high value components or medical prostheses, such as, for example, dental or orthopaedic prostheses, on the basis of CAD data.

An exemplary apparatus for producing three-dimensional work pieces by powder bed fusion as described, e.g., in WO 2019/141381 A1, comprises a carrier configured to receive multiple layers of raw material and an irradiation unit configured to selectively irradiate laser radiation onto the raw material on the carrier in order to produce a work piece. The irradiation unit is provided with a spatial light modulator configured to split a laser beam into at least two sub-beams. In order to provide the spatial light modulator with a linearly polarized laser beam, a polarization means which performs a linear polarization of the laser beam is provided upstream of the spatial light modulator.

Upon building up a three-dimensional work piece on the carrier of a powder bed fusion apparatus, the absorption of laser radiation impinging onto the raw material powder causes the raw material powder to melt and/or sinter so that a melt pool of molten raw material is generated. Further, the evaporation of raw material leads to the formation of a vapor capillary via which the laser beam penetrates into deeper regions of the raw material.

It may be desired to provide a method of operating an irradiation system for irradiating layers of a raw material powder with laser radiation to produce a three-dimensional work piece, and an irradiation system of this kind which allow an efficient production of a high-quality work piece. Further, an apparatus for producing a three-dimensional work piece comprising (e.g., being equipped with) an irradiation system which allows an efficient production of a high-quality work piece may be desirable.

The irradiation system referred to herein may comprise an optical unit configured to receive laser radiation having a first polarization state and to output laser radiation having a second polarization state. The optical unit referred to herein may comprise an optical medium. In a method of operating the irradiation system for irradiating layers of a raw material powder with laser radiation to produce a three-dimensional work piece, at least a section of a raw material powder layer applied onto a carrier may be selectively irradiated with laser radiation having the second polarization state. The second polarization state may be defined based on an electric field and/or a magnetic field through the optical medium. In one example, the section of the raw material powder layer is selectively irradiated with linearly polarized laser radiation having a degree of polarization, DOP, which, in one particular variant, is no more than 99% and no less than 30% (i.e., 30% ≤ DOP ≤ 99%).

As used herein, DOP is a quantity that describes a linearly polarized portion of an electromagnetic wave. A perfectly linearly polarized wave has a DOP of 100%, whereas a fully unpolarized wave has a DOP of 0%. A wave that is partially linearly polarized, and therefore can be represented by a superposition of a linearly polarized component and a non-linearly polarized (e.g., unpolarized) component, will have a DOP between 0% and 100%. The DOP may be calculated as the fraction of the total power that is carried by the linearly polarised component of the electromagnetic wave.

The linearly polarized laser radiation may have a DOP equal to or lower than a first threshold, wherein the first threshold is one of 100%, 99%, 98%, 97%, 96% or 95%. Alternatively, or in addition, the linearly polarized laser radiation may have a DOP equal to or higher than a second threshold, wherein the second threshold is one of 30%, 60%, 75%, 85%, 90% or 95%. Put differently, at least one of the following conditions may apply: (i) DOP ≤ first threshold; (ii) second threshold ≤ DOP.

Experiments have shown that a DOP between 85% and 99% yield the best results in case a metallic powder is used. Thus, in one preferred example, the first threshold is 99% and the second threshold is 85%. In this preferred example, the raw material powder may be a metallic powder.

The raw material powder layer may be applied onto a surface of the carrier by means of a powder application device which is moved across the carrier so as to distribute the raw material powder. The carrier may be a rigidly fixed carrier. Preferably, however, the carrier is designed to be displaceable in vertical direction, so that, with increasing construction height of the work piece, as it is built up in layers from the raw material powder, the carrier can be moved downwards in the vertical direction. Further, the carrier may be provided with a cooling device and/or a heating device which are configured to cool and/or heat the carrier.

The carrier and the powder application device may be accommodated within a process chamber which is sealable against the ambient atmosphere. An inert gas atmosphere may be established within the process chamber by introducing a gas stream into the process chamber via a gas inlet. After being directed through the process chamber and across the raw material powder layer applied onto the carrier, the gas stream may be discharged from the process chamber via a gas outlet. The raw material powder applied onto the carrier within the process chamber is preferably a metallic powder, in particular a metal alloy powder, but may also be a ceramic powder or a powder containing different materials. The powder may have any suitable particle size or particle size distribution. It is, however, preferable to process powders of particle sizes < 100 µm.

The irradiation system may comprise a laser beam source which emits at least one beam of laser light, for example linearly polarized laser light (e.g., having a DOP above 95%). In particular, the laser beam source of the irradiation system may emit linearly polarized laser light (e.g., having a DOP above 95%) at a wavelength of 450 nm, i.e. "blue" laser light, or laser light at a wavelength of 532 nm, i.e. "green" laser light, or laser light at a wavelength in the rage of 1000 nm to 1090 nm or in the range of 1530 nm to 1610 nm, i.e. "infrared" laser light. It is, however, also conceivable that the laser beam source of the irradiation system emits at least one beam of random polarized (i.e. non-polarized) laser light which is converted into a linearly polarized laser light beam (e.g., having a DOP above 30%) by a suitable polarization device such as, for example, a polarizer or a polarizing beam splitter cube. If one or more beam splitter cubes are used to split the laser light beam into two or more partial beams with different polarization, only one partial beam may be used as irradiation beam while obstructing the other partial beams. Alternatively, one or more partial beams may be guided to different irradiation systems in one or more additive manufacturing apparatuses. Additionally or alternatively, one or more partial beams may be modified, especially its polarization or DOP may be changed. Additionally or alternatively, several beams may be combined before being guided collectively to an irradiation system. The several beams may be modified (e.g., to obtain a same polarization or orthogonal polarizations) before being combined.

The irradiation system may irradiate the raw material powder layer with a single laser beam. It is, however, also conceivable that the irradiation system irradiates two or more laser beams onto the raw material powder layer. In case the irradiation system irradiates the raw material powder layer with two or more laser beams, at least one laser beam may be a beam of linearly polarized laser light (e.g., having a DOP of no more than 99% and no less than 30%) and at least one further laser beam may be a beam of random polarized laser light (e.g., having a DOP of 0%, 10% or 15%), a beam of circularly polarized laser light, radially polarized laser light and/or a beam of azimuthally polarized laser light. The plural laser light beams irradiated onto the raw material powder layer by the irradiation system may be emitted by suitable sub-units of the laser beam source.

The at least one optical unit referred to herein may be configured for splitting, guiding and/or processing the at least one laser beam emitted by the laser beam source. The optical unit may comprise one or more optical elements such as the optical medium, an object lens and a scanner unit, the scanner unit preferably comprising a diffractive optical element and/or a deflection mirror. The one or more optical elements may be arranged in a path of laser radiation emitted by the laser beam source of the irradiation system.

The DOP of the linearly polarized laser radiation may be defined and/or adjusted by the optical unit, in particular by the one or more optical elements. The deflection mirror may reduce the DOP of incident light upon reflection thereof. For example, linearly polarized laser radiation having a DOP of 99.5% may be emitted by the laser beam source and reflected by the deflection mirror. The reflected laser light may then have a lower DOP, for example a DOP of 98%. The linearly polarized laser light with the DOP of 98% may then irradiate the raw material powder layer.

It is to be understood that the DOP of the (e.g., linearly polarized) laser light used for irradiating the raw material powder layer may be statically predefined, for example by the optical properties of the one or more optical elements. Alternatively, the DOP of the (e.g., linearly polarized) laser light used for irradiating the raw material powder layer may be dynamically adjusted (e.g., controlled), for example by controlling movement, alignment or optical properties (e.g., a refractive index and/or a degree of birefringence) of the one or more optical elements (e.g., the optical medium). As a non-limiting example, the deflection mirror may have reflection characteristics that vary across its reflective surface. The DOP of reflected light may then depend on the location and angle of incident light on the reflective mirror surface.

The DOP of the (e.g., linearly polarized) laser radiation may be (e.g., statically) set or (e.g., dynamically) controlled in dependence on one or more of (i) a type or physical property of the raw material or the raw material powder, (ii) an intensity of the laser radiation (e.g., emitted by the laser source or irradiated onto the raw material powder layer), (iii) a scan speed with which a beam (14a, 14b) of the (e.g., linearly polarized) laser radiation is moved across the raw material powder layer (11), (iv) a scan vector (e.g., a scan vector of the plurality of scan vectors discussed further below), (v) an angle of incidence (e.g., the angle of incidence discussed further below).

The second polarization may correspond to one of a plurality of pre-set or predefined polarization states that can be defined by the optical unit. In other words, one of a plurality of pre-set polarization states may be selectively provided as the second polarization state. The second polarization state may be selected from the plurality of pre-set or predefined polarization states. The plurality of pre-set or predefined polarization states may comprise at least two of the following: a linear polarization with a plane of polarization having a first unique orientation; a linear polarization with a plane of polarization having a second unique orientation; a linear polarization with a plane of polarization having a third unique orientation; a circular polarization; a random polarization; a radial polarization; an azimuthal polarization. The plurality of pre-set polarization states in one example comprises three or more linear polarizations differing from one another in the orientation of their planes of polarization. Each of the three or more linear polarizations may have a (e.g., similar) DOP above the second threshold, for example above 50% or above 90%. The second polarization state may be switched between the plurality of pre-set polarization states for different sections of the raw material powder layer to be irradiated. The second polarization state may differ from the first polarization state in an orientation of the plane of polarization. The plurality of pre-set polarization states may differ from one another in a rotational shift of the plane of polarization of the output laser light relative to the plane of polarization of the received laser light.

(i) The second polarization state and/or (ii) an orientation of a plane of polarization of the laser radiation output by the optical unit and/or having the second polarization state (e.g., linearly polarized laser radiation) may be controlled in dependence on an orientation of a plane of incidence of the (e.g., linearly polarized) laser radiation on the raw material. The orientation of the plane of polarization of the (e.g., linearly polarized) laser radiation (e.g., output by the optical unit) may be associated with or defined by the second polarization state.

The term "plane of polarization" as used herein refers to a plane which is defined by a propagation vector of the incident laser beam and an electric field vector of the electromagnetic laser light wave and hence coincides with a plane of vibration of the electric field of the electromagnetic laser light wave. The term "plane of incidence" as used herein refers to a plane which is defined by the propagation vector of the incident laser beam and a surface normal which extends perpendicular to a raw material surface onto which the incident laser beam impinges. One may say that in case of a linearly polarized electromagnetic wave having a DOP of 80%, the total power that is carried by the linearly polarized component of the electromagnetic wave, which has an electric field vector lying in the plane of polarization, amounts to 80% of the total power that is carried by the electromagnetic wave. The plane of polarization may be defined by the largest electric field vector of the laser radiation.

The orientation of the plane of polarization of the (e.g., linearly polarized) laser radiation output by the optical unit relative to the plane of incidence of this (e.g., linearly polarized) laser radiation on the raw material has a strong influence on the absorption of the laser energy by the raw material, as does the DOP of the (e.g., linearly polarized) laser radiation output by the optical unit and/or having the second polarization state. Thus, by controlling the second polarization state and/or the orientation of the plane of polarization of the laser radiation output by the optical unit in dependence on the plane of incidence of the (e.g., linearly polarized) laser radiation on the raw material and/or controlling the DOP of the (e.g., linearly polarized) laser radiation having the second polarization state in dependence on the plane of incidence of the (e.g., linearly polarized) laser radiation on the raw material, the absorption of the energy of the (e.g., linearly polarized) laser light by the raw material can be controlled.

By taking into consideration and actively controlling the absorption of the laser energy by the raw material an improved process stability upon producing three-dimensional work pieces can be achieved. Further, by increasing the absorption of the laser energy in a controlled manner, the process productivity can be increased. Consequently, high-quality work pieces can be produced in a particularly efficient way. In addition, materials such as for example Cu and Cu alloys, which at present are difficult to process by laser or sintering/melting may become processible by irradiating a respective raw material powder with (e.g., linearly polarized) laser radiation while controlling the orientation of a plane of polarization of the (e.g., linearly polarized) laser radiation in dependence on an orientation of a plane of incidence of the (e.g., linearly polarized) laser radiation on the raw material, and/or controlling the DOP of the (e.g., linearly polarized) laser radiation in dependence on the orientation of the plane of incidence of the (e.g., linearly polarized) laser radiation on the raw material.

The orientation of the plane of polarization of the (e.g., linearly polarized) laser radiation (e.g., output by the optical unit and/or having the second polarization state) may be controlled in dependence on the orientation of the plane of incidence of the (e.g., linearly polarized) laser radiation on the raw material such that the plane of polarization is oriented substantially parallel to the plane of incidence. In other words, the orientation of the plane of polarization of linearly polarized laser radiation (e.g., output by the optical unit and/or having the second polarization state) may be controlled relative to the orientation of the plane of incidence of the linearly polarized laser radiation on the raw material such that a p-pol state is reached.

In the p-pol state, the absorption of the energy of linearly polarized laser radiation by the raw material generally is higher than in a s-pol state, wherein the plane of polarization extends perpendicular to the plane of incidence. In addition, the absorption of linearly polarized laser radiation in the p-pol state is generally also higher than the absorption of random polarized laser radiation. Consequently, by controlling the orientation of the plane of polarization relative to the orientation of the plane of incidence such that a p-pol state is reached, the absorption of the laser energy can be increased in a controlled manner. Generally speaking, the larger the amount of energy carried by a linearly polarized component of the laser radiation that corresponds to a p-pol-state, the higher the absorption of energy of the laser radiation. The amount of energy carried by the linearly polarized component depends on the DOP of the laser radiation and on the overall radiation intensity. By increasing the DOP, the amount of energy carried by the linearly polarized component will increase. Thus, the DOP of the linearly polarized laser radiation (e.g., output by the optical unit and/or having the second polarization state) may be controlled in addition or alternative to the orientation of the plane of polarization of the linearly polarized laser radiation (e.g., output by the optical unit and/or having the second polarization state), to control an amount of laser energy absorbed by the irradiated powder material.

For example, at least one of (i) the DOP of the (e.g., linearly polarized) laser radiation output by the optical unit and/or having the second polarization state, (ii) the second polarization state, and (iii) the orientation of the plane of polarization of the (e.g., linearly polarized) laser radiation output by the optical unit and/or having the second polarization state is controlled in dependence on the orientation of the plane of incidence of the (e.g., linearly polarized) laser radiation (e.g., having the second polarization state) on an inner wall surface of a capillary extending from a surface of the raw material powder layer into a volume of the raw material powder layer and being formed due to an interaction of the (e.g., linearly polarized) laser radiation with the raw material. The capillary may be a vapor capillary which is formed due to the evaporation of raw material heated by the absorption of the energy of the laser beam impinging on the raw material layer. The size and shape of the capillary may depend on various parameters, such as a power, a focus diameter and a focus shape of the incident laser beam, a scan speed and a scan direction of the laser beam and/or at least one parameter of a gas flow which is directed across the raw material powder layer in order to establish a controlled atmosphere within the process chamber and in order to remove particulate impurities, such as splash particles, smoke particles or soot particles, that are generated upon irradiating the raw material powder layer. A predefined (e.g. previously measured) list of sizes and shapes of capillaries, the sizes and shapes being associated with different sets of the aforementioned various parameters, may be used to estimate an orientation of the inner wall surface of the capillary relative to the surface of the raw powder material layer, based on the various parameters as used (or the various parameters to be used) during the irradiation with the (e.g., linearly polarized) laser radiation. Predefined correlations between the orientation of the inner wall surface of the capillary and various process parameters such as laser power and scanning speed may be used to predict the orientation of the inner wall surface. These correlations may be obtained as described by Cunningham et.al.: "Keyhole threshold and morphology in laser melting revealed by ultrahigh-speed x-ray imaging", Science, 363, 849-552.

Instead of estimating a size and shape of the capillary using such a predefined list, an orientation of the inner wall surface of the capillary may be determined based on a direction of a trajectory along which (e.g., molten powder) material is ejected from the raw material powder layer (e.g., from the capillary). The ejected material may be referred to as a "splash" or a metal micro-droplet. The trajectory may be determined based on two or more (e.g., video) images of the powder layer acquired by an (e.g., infrared- or visible-wavelength-) imaging system (e.g., comprised in the apparatus described herein). The imaging system may comprise a so-called on-axis camera. The on-axis camera may be arranged to acquire an image via the optical unit. Alternatively, the imaging system may comprise a camera arranged and configured to acquire an image of the complete powder layer. Further details of determining the trajectory and/or the orientation of the inner wall surface of the capillary are for example described by Ly, S., Rubenchik, A.M., Khairallah, S.A. et al.: "Metal vapor micro-jet controls material redistribution in laser powder bed fusion additive manufacturing", Sci Rep 7, 4085 (2017). A main direction may be determined based on directions of a plurality of trajectories of separate splashes or micro-droplets. The main direction may then be used to determine the (e.g., average) orientation of the inner wall surface of the capillary. The main direction may correspond to or be determined based on an average or median of the directions of the plurality of trajectories. The average may be a weighted average. The directions of the plurality of trajectories may be weighted based on the size of the respective splash or micro-droplet to determine the weighted average.

The imaging system may be used to determine the orientation of the inner wall without detecting any splashes and without determining the trajectory. In this case, the orientation of the inner wall may be determined based on a size of the capillary as detected in an image acquired by the imaging system. The image may be acquired in a direction perpendicular to the upper surface of the material powder layer. Generally speaking, the larger the angle between the inner wall and the viewing direction of the imaging system (e.g., the normal of the surface of the material powder layer), the larger the detected outline of the capillary. In case of a laser beam having a circular cross-section, the capillary may have an elliptical outline in the image acquired by the imaging system, wherein the major axis of the elliptical outline will be larger in case of a larger angle between the inner wall and the viewing direction of the imaging system. Thus, the orientation of the inner wall (e.g., the angle of the inner wall relative to the surface of the powder material) may be determined based on a size and/or shape of the (e.g., outline of the) capillary as detected in the image acquired by the imaging system. Multiple images, acquired at different points in time or from different viewing directions, may be used to determine a plurality of angles of the inner wall of the capillary at different points in time. A main angle may then be determined based on the plurality of angles (e.g., as an average, a median or a weighted average). The main angle may then be assumed to be the angle of the inner wall and/or to represent the orientation of the inner wall.

It is noted that the trajectory of the micro-droplet does not need to be determined using a camera, but may be determined in a different manner (e.g., using a distance sensor). The shape of the capillary and/or the orientation of the inner wall surface may also be simulated (e.g., in advance), for example using a finite element simulation tool and/or a computational fluid dynamics (CFD) simulation tool. In a still further variant, the depth of the capillary and/or the orientation of the inner wall surface may be measured using any applicable measurement technique, for example optical coherence tomography (OCT). The measurement may be performed by an on-axis (e.g., OCT-)measurement sensor, for example.

As a still further example, the orientation of the inner wall surface may be determined based on a radiographic (e.g., X-ray) image of at least a portion of the raw material powder. The radiographic image may be acquired in a direction parallel to an upper surface of the raw material powder and/or the inner wall surface. The radiographic image may represent a side view of the capillary. The irradiation system and/or the apparatus disclosed herein may comprise an X-ray imaging unit configured to acquire the radiographic image. The radiographic image may be acquired as described by Parab et al.: "Ultrafast X-ray imaging of laser-metal additive manufacturing processes", J. Synchrotron Rad. 25, 1467-1477.

In general, a median or a (e.g., weighted) average of a plurality of orientations of the inner wall surface may be determined and assumed to be the (e.g., correct or suitable) orientation of the inner wall surface. The same applies to the determined shape of the capillary.

By using linearly polarized laser radiation having a DOP of no more than the first threshold (e.g., 99%), the non-polarized components of the radiation will be reflected multiple times inside the capillary, resulting in an enlargement of the capillary. Thus, the capillary will be more stable and the risk of splashes of material may be reduced compared with a scenario in which linearly polarized laser radiation having a DOP above the first threshold (e.g., 100%) is used.

The laser beam irradiated onto the raw material powder layer penetrates into the capillary and impinges on an inner wall surface of the capillary which has a different orientation than an upper surface of the raw material powder layer. For example, the surface of the inner wall of the capillary onto which the laser beam impinges may extend at an angle of approximately 45° to 90° (e.g., at an angle of approximately 60° to 80°) relative to the upper surface of the raw material powder layer which typically is oriented substantially parallel to a surface of the carrier onto which the raw material powder layer is applied. By considering the orientation of the plane of incidence of the (e.g., linearly polarized) laser radiation on an inner wall surface of the capillary formed due to the interaction of the laser beam with the raw material upon controlling the second polarization state and/or the orientation of the plane of polarization of the (e.g., linearly polarized) laser radiation (e.g., output by the optical unit and/or having the second polarization state) and/or the DOP of the (e.g., linearly polarized) laser radiation (e.g., output by the optical unit and/or having the second polarization state), a particularly reliable and accurate control of the absorption of the laser energy by the raw material is made possible.

A change of the scan direction of the laser beam across the raw material powder layer may lead to a change of the orientation of the plane of incidence of the (e.g., linearly polarized) laser radiation on the raw material, for example in case of parallel scan paths irradiated in opposite scan directions. Therefore, upon controlling the second polarization state and/or the orientation of the plane of polarization of the (e.g., linearly polarized) laser radiation (e.g., output by the optical unit and/or having the second polarization state) in dependence on the orientation of the plane of incidence of the (e.g., linearly polarized) laser radiation on the raw material, at least one of (i) the DOP of the (e.g., linearly polarized) laser radiation (e.g., output by the optical unit and/or having the second polarization state), (ii) the second polarization state, and (iii) the orientation of the plane of polarization of the (e.g., linearly polarized) laser radiation (e.g., output by the optical unit and/or having the second polarization state) may be updated in dependence on the scan direction of the (e.g., linearly polarized) laser radiation across the raw material powder layer.

For updating the orientation of the plane of polarization of the (e.g., linearly polarized) laser radiation, a polarization device, for example a wave plate, in particular a half-wave plate, may be rotated. Alternatively, a collimator which, in an optical path of the laser light emitted from the radiation beam source, is arranged downstream of the polarization device, may be rotated. Further, at least one deflection mirror, in particular a pair of deflection mirrors, for deflecting the beam of (e.g., linearly polarized) laser radiation as needed may be employed. Additionally, for deflecting the beam of (e.g., linearly polarized) laser light there may be two pairs of deflection mirrors employed, one to effect the rotation of the plane of polarization and one to effect the deflection of the beam. For example, mirrors with metallic coatings (e.g. aluminium, silver, gold, etc.) may be used. The DOP may be controlled as described above using one or more optical elements arranged in the optical path of the laser light emitted from the radiation beam source.

In a preferred variant, the optical unit receives laser radiation (e.g., from the laser beam source and/or a polarizer arranged after the laser beam source) having a first polarization state and outputs laser radiation having a (e.g., different) second polarization state. The optical unit may in particular change the first polarization state to the second polarization state. In other words, the polarization state of the laser radiation may be changed when the laser radiation travels through the optical unit. As mentioned above, the optical unit in a preferred variant comprises an optical medium. The second polarization state may be defined based on an electric field and/or a magnetic field through the optical medium. This approach may be advantageous compared with mechanical solutions requiring spatial movement of optical elements for defining and/or controlling a polarization state of laser light. A mechanical failure may be avoided, a longer lifetime of the irradiation unit may be enabled and a faster change of the second polarization state may be realized.

At least one of (i) the DOP of the (e.g., linearly polarized) laser radiation (e.g., output by the optical unit and/or having the second polarization state), (ii) the second polarization state, and (iii) the orientation of the plane of polarization of the (e.g., linearly polarized) laser radiation (e.g., output by the optical unit and/or having the second polarization state) may be updated based on an analysis of a scan pattern according to which the beam of (e.g., linearly polarized) laser radiation is directed across the raw material powder layer. By analyzing the scan pattern, changes of the scan direction of the laser beam across the raw material powder layer may be determined. Consequently, the at least one of (i) the DOP of the (e.g., linearly polarized) laser radiation (e.g., output by the optical unit and/or having the second polarization state), (ii) the second polarization state, and (ii) the orientation of the plane of polarization of the (e.g., linearly polarized) laser radiation (e.g., output by the optical unit and/or having the second polarization state) may be updated as needed and synchronized with the operation of the scanner unit which scans the laser beam across the raw material powder layer. The analysis of the scan pattern may be performed prior to starting the production of the three-dimensional work piece and/or in situ during the production of the three-dimensional work piece.

The absorption of the energy of the (e.g., linearly polarized) laser radiation by the raw material strongly depends on an angle of incidence of the laser beam on the raw material. In the p-pol state and at least for angles of incidence between approximately 10° and 80°, the absorption increases with an increasing angle of incidence. The term "angle of incidence" as used herein refers to an angle between the propagation vector of the incident laser beam and the surface normal which extends perpendicular to the raw material surface onto which the incident laser beam impinges.

For selectively irradiating the raw material powder layer, i.e. for scanning the laser beam across the raw material powder layer, the laser beam is deflected relative to a surface normal extending perpendicular to the upper surface of the raw material powder layer. Consequently, the angle of incidence depends on an angle of deflection of the incident laser beam relative to the surface normal extending perpendicular to the upper surface of the raw material powder layer and hence an operational state of the scanner unit. In addition, the angle of incidence depends on an orientation of the raw material surface onto which the incident laser beam impinges.

Besides the angle of incidence of the (e.g., linearly polarized) laser beam, a number of further process parameters may influence the absorption of the laser energy by the raw material. These parameters may include a power, a focus diameter and a focus shape of the beam of (e.g., linearly polarized) laser radiation. Further, a scan speed, a scan mode (leading or trailing), a scan direction and a scan pattern according to which the laser beam is directed across the raw material powder layer may have an effect on the absorption of the laser energy by the raw material. Also the gas flow which is directed through the process chamber and across the surface of the raw material powder layer, in particular a volume flow and a flow speed of the gas flow as well as the type of gas may influence the absorption.

Therefore, at least one of the DOP, the second polarization state, a power, a focus diameter and a focus shape of a beam of (e.g., linearly polarized) laser radiation and/or at least one of a scan speed, a scan mode, a scan direction and a scan pattern according to which the beam of (e.g., linearly polarized) laser radiation is directed across the raw material powder layer and/or at least one parameter of a gas flow directed across the raw material powder layer may be controlled in dependence on the angle of incidence of the beam of (e.g., linearly polarized) laser radiation on the raw material.

By correlating the angle of incidence of the (e.g., linearly polarized) laser beam with (a) further process parameter(s) which influence(s) the absorption of the laser energy by the raw material a particularly reliable control of the absorption may be achieved and overheating of the raw material may be avoided. In addition, the procedural efficiency may be increased. For example, a decrease of the absorption which results from a reduction of the laser power and/or an increase of the scan speed may be compensated by the increased absorption at suitable angles of incidence. Further, for specific raw materials, the energy applied to the raw materials may be increased in a controlled manner by suitably controlling the angle of incidence, for example in order to allow processing of these materials.

A beam of (e.g., linearly polarized) laser radiation may be scanned across the raw material powder layer according to a scan strategy, wherein a plurality of scan vectors pointing in a first vector direction are successively scanned, before at least one scan vector pointing in a second vector direction which differs from the first vector direction is scanned. A scan vector pointing in a first vector direction v1 can be scanned "forwards" in a direction +v1 and "backwards" in a direction -v1 without changing the orientation of the plane of polarization of the (e.g., linearly polarized) laser radiation and/or the DOP of the (e.g., linearly polarized) laser radiation and/or the second polarization state. Similarly, a scan vector pointing in a second vector direction v2 can be scanned "forwards" in a direction +v2 and "backwards" in a direction -v2 without changing the orientation of the plane of polarization of the (e.g., linearly polarized) laser radiation and/or of the DOP of the (e.g., linearly polarized) laser radiation and/or the second polarization state. Thus, a change of the orientation of the plane of polarization of the (e.g., linearly polarized) laser radiation (e.g., output by the optical unit and/or having the second polarization state) and/or of the DOP of the (e.g., linearly polarized) laser radiation (e.g., output by the optical unit and/or having the second polarization state) and/or of the second polarization state may only be required in case the vector direction (i.e., a direction of extension of the vector) is changed. With such a scan strategy, the "number of updates" of the orientation of the plane of polarization and/or the DOP and/or the second polarization state can be reduced. Consequently, the updating process can be simplified.

A first section of the raw material powder layer may be selectively irradiated with linearly polarized laser radiation (e.g., having the DOP of no more than 99% and no less than 30%), and a second section of the raw material powder layer may be selectively irradiated with circularly polarized laser radiation, randomized laser radiation (e.g., having a DOP of 0%, 10% or 15%), radially polarized laser radiation and/or azimuthally polarized laser radiation. The second section may be a section of the raw material powder layer which is intended to be irradiated according to a scan strategy which requires a frequent and/or fast updating of either one or more of (i) the DOP of the (e.g., linearly polarized) laser radiation (e.g., output by the optical unit and/or having the second polarization state), (ii) the second polarization state, or (iii) the orientation of the plane of polarization of the (e.g., linearly polarized) laser radiation (e.g., output by the optical unit and/or having the second polarization state). For example, the second section may be a section of the raw material powder layer which is intended to be irradiated according to a scan pattern which comprises a high density of short scan vectors and/or scan vectors pointing in a plurality of directions and/or which is intended to be irradiated at a high scan speed.

In particular, the first section of the raw material powder layer may be a hatch section of a work piece layer generated by selectively irradiating the raw material powder layer. The second section of the raw material powder layer may be a contour section of a work piece layer generated by selectively irradiating the raw material powder layer. Consequently, the advantages of irradiating the raw material powder layer with linearly polarized laser radiation as described above can be realized in the hatch section which typically forms the majority of the area of the work piece layer. At the same time, difficulties which may arise upon updating the orientation of the plane of polarization, the second polarization state and/or the DOP of the (e.g., linearly polarized) laser radiation (e.g., output by the optical unit and/or having the second polarization state) may be avoided in the contour section.

A plurality of beams of (e.g., linearly polarized) laser radiation (e.g., each having a DOP of no more than 99% and no less than 30%) may be scanned across an overlap section of the raw material powder layer according to a scan strategy, wherein all scan vectors are scanned according to the same scan mode. Each of the plurality of beams may have the same second polarization state (e.g., be linearly polarized). The term "overlap section" as used herein defines a section of the raw material powder layer which can be irradiated with more than one laser beam. For example, in the overlap section of the raw material powder layer, all scan vectors are scanned according to a trailing scan mode or all scan vectors are scanned according to a leading scan mode. Thus, in the overlap section, the absorption of the laser radiation by the raw material is not influenced by the scan mode and hence can be controlled more reliably.

As apparent from the above, the irradiation system for irradiating layers of a raw material powder with laser radiation to produce a three-dimensional work piece may be configured to selectively irradiate at least a section of a raw material powder layer applied onto a carrier with laser radiation having the second polarization state (e.g., linearly polarized laser radiation having a DOP of no more than 99% and no less than 30%). To this end, the irradiation system may comprise the optical unit configured to provide the second polarization state as described above. In particular, the optical unit may be configured to change the first polarization state of received laser radiation into the second polarization state. The change in the polarization state may occur in the optical medium due to an electric field and/or a magnetic field provided through the optical medium. The optical unit may be configured to apply the electric field and/or the magnetic field through the optical medium to define and/or control the second polarization state. The optical unit may comprise one or more pairs of electrodes arranged adjacent to (e.g., in contact with or spaced from) the optical medium, and may apply the electric field and/or the magnetic field through the optical medium by applying a voltage difference between the electrodes of at least one of the pairs of electrodes and/or by feeding a current between the electrodes of at least one of the pairs of electrodes. The optical unit may be configured to change the second polarization state by changing at least one parameter of the electric and/or the magnetic field, the at least one parameter comprising one or more of a direction, a flux intensity, a homogeneity, a strength, a (e.g., switching and/or alternating) frequency. The optical unit may be configured to (e.g., continuously) change the orientation of the plane of polarization of the received laser radiation having the first polarization state over a range of rotation angles (e.g., 0°-90° or 0°-180°) to provide the laser radiation having the second polarization state. The optical unit may be configured to (e.g., dynamically) change the orientation of the plane of polarization of the received laser light by an adjustable and/or controllable amount (e.g., controlled by the control device described herein).

The optical medium may be configured such that at least one of (i) a refractive index of the optical medium and (ii) a degree of birefringence of the optical medium depends on the electric field and/or the magnetic field. The optical medium may be configured to exhibit an electro-optic effect. The electro-optical effect may correspond to the Kerr electro-optic effect or to the Pockels electro-optic effect.

The optical unit may be configured to use Faraday rotation or electrogyration to define the second polarization state. The optical unit may be configured to apply the electric field or the magnetic field in parallel to a travel direction of laser light through the optical medium. In another variant, the optical unit may be configured to apply the electric field or the magnetic field slant (e.g., orthogonal) relative to a travel direction of laser light through the optical medium.

The optical unit may comprise at least one of the following components including the optical medium: an (e.g., free-space) electro-optic modulator; a voltage-controlled wave plate; a liquid crystal variable retarder; a Pockels cell; a Faraday rotator.

The irradiation system may comprise at least one component arranged, together with the optical medium, in an optical path of laser radiation, the at least one component being selected from (i) a laser focusing unit, (ii) a scanner unit, and (iii) an optical amplifier, wherein the optical medium is arranged, relative to a travel direction of laser radiation along the optical path, upstream of (e.g., before and/or in front of) one or more of the at least one component. This may enable an irradiation of raw material with a laser beam having a desired beam shape, focus position and/or power while ensuring the laser beam impinging on the raw material has the second polarization state. In case of the optical medium being arranged upstream of the optical amplifier, a laser power absorbed by the optical medium may be reduced. In case of the optical medium being arranged upstream of the focusing unit, a power density of the laser radiation incident onto and/or traveling through the optical medium may be reduced. These effects may enable using optical media suitable for low laser powers (e.g., below 300W) while ensuring irradiation of the raw material with sufficiently high laser power (e.g., 1000W) and/or power density (e.g., 1000W/10.000µm²).

The irradiation system may further comprise a control device configured to control the optical unit. In this manner, the control device may also control the second polarization state. The control device may be configured to control the optical unit to apply the electric field and/or the magnetic field through the optical medium to define the second polarization state. The control unit may be configured to (e.g., dynamically) change the orientation of the plane of polarization of the received laser light by a desired amount.

The control device may in particular be configured to perform one or more of the method steps described herein. For example, the control device may be configured to control, in dependence on the orientation of the plane of incidence of the laser radiation on the raw material, (i) the second polarization state defined by the optical unit and/or (ii) a plane of polarization of the laser radiation output by the optical unit. In other words, the control unit may be configured to control the orientation of the plane of polarization of the (e.g., linearly polarized) laser radiation (e.g., having the second polarization state and/or output by the optical unit) in dependence on the orientation of the plane of incidence of the (e.g., linearly polarized) laser radiation (e.g., having the second polarization state and/or output by the optical unit) on the raw material.

The control device of the irradiation system may be configured to control the second polarization state and/or the orientation of the plane of polarization of the (e.g., linearly polarized) laser radiation (e.g., having the second polarization state and/or output by the optical unit) in dependence on the orientation of the plane of incidence of the (e.g., linearly polarized) laser radiation on the raw material such that the plane of polarization is oriented substantially parallel to the plane of incidence. Thus, a p-pol state can be achieved.

The control device may further be configured to control the DOP and/or the second polarization state of the (e.g., linearly polarized) laser radiation (e.g., having the second polarization state and/or output by the optical unit) in dependence on the orientation of the plane of incidence of the (e.g., linearly polarized) laser radiation on the raw material. The DOP and/or the second polarization state may be controlled to adjust the amount of energy of a linearly polarized component of the laser radiation that is in the p-pol state (e.g., that has an E-field in the plane of incidence).

The control device may further be configured to control at least one of (i) the DOP of the (e.g., linearly polarized) laser radiation (e.g., having the second polarization state and/or output by the optical unit), (ii) the second polarization state, and (ii) the orientation of the plane of polarization of the (e.g., linearly polarized) laser radiation (e.g., having the second polarization state and/or output by the optical unit) in dependence on the orientation of the plane of incidence of the (e.g., linearly polarized) laser radiation on an inner wall surface of a capillary extending from a surface of the raw material powder layer into a volume of the raw material powder layer and being formed due to an interaction of the (e.g., linearly polarized) laser radiation with the raw material.

Moreover, the control device, upon controlling the orientation of the plane of polarization of the (e.g., linearly polarized) laser radiation (e.g., having the second polarization state and/or output by the optical unit) in dependence on the orientation of the plane of incidence of the (e.g., linearly polarized) laser radiation on the raw material, may be configured to update at least one of (i) the DOP of the (e.g., linearly polarized) laser radiation (e.g., having the second polarization state and/or output by the optical unit), (ii) the second polarization state, and (iii) the orientation of the plane of polarization of the (e.g., linearly polarized) laser radiation (e.g., having the second polarization state and/or output by the optical unit) in dependence on a scan direction of the (e.g., linearly polarized) laser radiation across the raw material powder layer.

The control device may be configured to update at least one of (i) the DOP of the (e.g., linearly polarized) laser radiation (e.g., having the second polarization state and/or output by the optical unit), (ii) the second polarization state, and (iii) the orientation of the plane of polarization of the (e.g., linearly polarized) laser radiation (e.g., having the second polarization state and/or output by the optical unit) based on an analysis of a scan pattern according to which the beam of (e.g., linearly polarized) laser radiation is directed across the raw material powder layer. The analysis of the scan pattern may be performed prior to starting the production of the three-dimensional work piece and/or in situ during the production of the three-dimensional work piece.

The control device may further be configured to control at least one of a power, a focus diameter and a focus shape of a beam of (e.g., linearly polarized) laser radiation and/or at least one of a scan speed, a scan direction, a scan mode and a scan pattern according to which the beam of (e.g., linearly polarized) laser radiation is directed across the raw material powder layer and/or at least one parameter of a gas flow directed across the raw material powder layer in dependence on an angle of incidence of the beam of (e.g., linearly polarized) laser radiation on the raw material.

As described above, linearly polarized laser radiation may have a DOP equal to or lower than a first threshold (e.g., 100%, 99%, 98%, 97%, 96% or 95%). Linearly polarized laser radiation may have a DOP equal to or higher than a second threshold (e.g., 30%, 60%, 75%, 85%, 90% or 95%). The first threshold may be 99% and the second threshold may be 85%, wherein, optionally, the raw material is a metal.

As described above, the irradiation system may comprise a laser beam source and one or more optical elements arranged in a path of laser radiation emitted by the laser beam source. The one or more optical elements may be configured to define or adjust the DOP of the (e.g., linearly polarized) laser radiation. The one or more optical elements may comprise a deflection mirror configured to reduce a DOP of incident light upon reflection thereof. The one or more optical elements may be part of the optical unit.

The control device may be configured to control a scanner unit such that a beam of (e.g., linearly polarized) laser radiation (e.g., having the second polarization state and/or output by the optical unit) is scanned across the raw material powder layer according to a scan strategy, wherein, optionally, a plurality of scan vectors pointing in a first vector direction (e.g., all scan vectors of the first section and pointing in the first vector direction) are successively scanned, before at least one scan vector (e.g., of the second section) pointing in a second vector direction which differs from the first vector direction is scanned.

The control device may be configured to control the irradiation system such that a first section of the raw material powder layer is selectively irradiated with linearly polarized laser radiation, and a second section of the raw material powder layer is selectively irradiated with circular polarized laser radiation. The control device may be configured to control the irradiation system such that the first section of the raw material powder layer is selectively irradiated with linearly polarized laser radiation and the second section of the raw material powder layer is selectively irradiated with one or more of circularly polarized laser radiation, randomized laser radiation, radially polarized laser radiation and/or azimuthally polarized laser radiation.

As described above, the first section of the raw material powder layer may be a hatch section of a work piece layer generated by selectively irradiating the raw material powder layer. As described above, the second section of the raw material powder layer may be a contour section of a work piece layer generated by selectively irradiating the raw material powder layer.

The control device may be configured to control a scanner unit such that a plurality of beams of (e.g., linearly polarized) laser radiation (e.g., having the second polarization state and/or output by the optical unit; each of the plurality of beams for example having a DOP of no more than 99% and no less than 30%) are scanned across an overlap section of the raw material powder layer according to a scan strategy, wherein all scan vectors are scanned according to the same scan mode.

An apparatus for producing a three-dimensional work piece may be equipped with an above-described irradiation system. The apparatus may comprise further components described above such as the carrier, the powder application device, the process chamber and/or the scanner unit.

Embodiments will be described in greater detail with reference to the appended schematic drawings, wherein
- Figure 1: shows an apparatus for producing a three-dimensional work piece by irradiating layers of a raw material powder with laser radiation;
- Figure 2: shows an irradiation system employed in the apparatus of figure 1;
- Figure 3: illustrates the interaction of a beam of linearly polarized laser radiation with the raw material; and
- Figure 4: shows a diagram indicating the dependency of the absorption of laser radiation by the raw material on the polarization state of the laser radiation and the angle of incidence of the laser beam on the raw material.

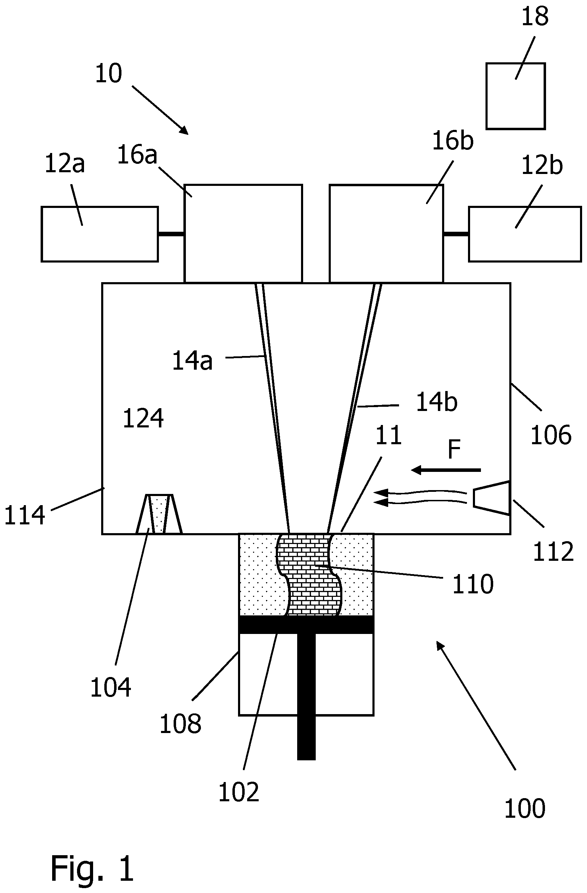

Figure 1 shows an apparatus 100 for producing a three-dimensional work piece by an additive layering process. The apparatus 100 comprises a carrier 102 and a powder application device 104 for applying a raw material powder onto the carrier 102. The carrier 102 and the powder application device 104 are accommodated within a process chamber 106 which is sealable against the ambient atmosphere. The carrier 102 is displaceable in a vertical direction into a built cylinder 108 so that the carrier 102 can be moved downwards with increasing construction height of a work piece 110, as it is built up in layers from the raw material powder on the carrier 12. The carrier 102 may comprise a heater and/or a cooler.

The apparatus 100 further comprises an irradiation system 10 for selectively irradiating laser radiation onto the raw material powder layer 11 applied onto the carrier 102. In the embodiment of an apparatus 100 shown in figure 1, the irradiation system 10 comprises two laser beam sources 12a, 12b, each of which is configured to emit a laser beam 14a, 14b. An optical unit 16a, 16b for guiding and processing the laser beams 14a, 14b emitted by the laser beam sources 12a, 12b is associated with each of the laser beam sources 12a, 12b. It is, however, also conceivable that the irradiation system 10 is equipped with only one laser beam source and only one optical unit and consequently emits only a single laser beam. A control device 18 is provided for controlling the operation of the irradiation system 10 and further components of the apparatus 100 such as, for example, the powder application device 104.

A controlled gas atmosphere, preferably an inert gas atmosphere is established within the process chamber 106 by supplying a shielding gas to the process chamber 106 via a process gas inlet 112. After being directed through the process chamber 106 and across the raw material powder layer 11 applied onto the carrier 102, the gas is discharged from the process chamber 106 via a process gas outlet 114. The flow direction of the shielding gas from the process gas inlet 112 through the process chamber 106 to the gas process gas outlet 114 is indicated with the arrow F. The process gas may be recirculated from the process gas outlet 114 to the process gas inlet 112 and thereupon may be cooled or heated.

During operation of the apparatus 100 for producing a three-dimensional work piece, a layer 11 of raw material powder is applied onto the carrier 102 by means of the powder application device 104. In order to apply the raw material powder layer 11, the powder application device 104 is moved across the carrier 102 under the control of the control unit 18. Then, again under the control of the control unit 18, the layer 11 of raw material powder is selectively irradiated with laser radiation in accordance with a geometry of a corresponding layer of the work piece 110 to be produced by means of the irradiation device 10. The steps of applying a layer 11 of raw material powder onto the carrier 102 and selectively irradiating the layer 11 of raw material powder with laser radiation in accordance with a geometry of a corresponding layer of the work piece 110 to be produced are repeated until the work piece 110 has reached the desired shape and size.

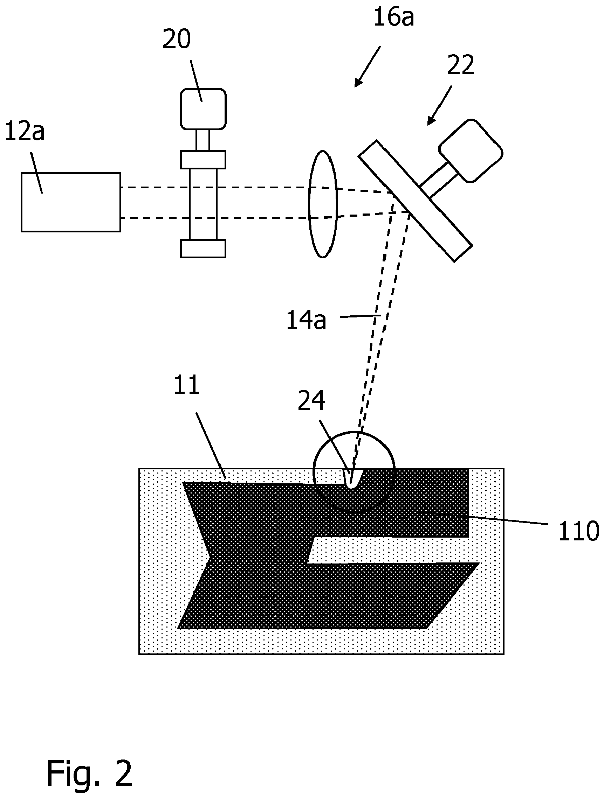

At least one of the laser beams 14a, 14b irradiated across the raw material powder layer 11 by the irradiation system 10 may be a beam of linearly polarized laser radiation (e.g., having a DOP of 99.5%). A more detailed illustration of the laser beam source 12a and the optical unit 16a is shown in figure 2. The laser beam source 12a in this example emits linearly polarized laser light, for example laser light at a wavelength 450 nm, i.e. "blue" laser light, or laser light at a wavelength of 532 nm, i.e. "green" laser light, or laser light at a wavelength in the rage of 1000 nm to 1090 nm or in the range of 1530 nm to 1610 nm, i.e. "infrared" laser light. The polarization device 20 is used for the rotation of the plane of polarization and may, for example, be designed in the form of a rotatably mounted wave plate, in particular a half-wave plate. The linearly polarized laser beam 14a is scanned across the raw material powder layer 11 by means of a scanner unit 22. The optical unit 16a may define and/or adjust the DOP of the laser light emitted by the laser beam source 12a. The linearly polarized laser radiation irradiated onto the raw material powder layer 11 thus has a DOP that is equal to or lower than 99%. The DOP of the linearly polarized laser radiation forming the laser beam 14a and irradiated onto the raw material powder layer 11 may be statically set or dynamically adjusted by the optical unit 16a, for example to a value between 30% and 100%, preferably between 85% and 99%. The DOP of the laser beam 14a may be set or adjusted by the optical unit 16a based on (a) control signal(s) from the control unit 18.

Instead of using a mechanical system as the polarization device 20, the optical unit 10 may comprise an optical medium. Generally speaking, the optical unit 10 receives the laser radiation having a first polarization state (e.g., linear polarization with a first orientation of the plane of polarization) from the associated laser beam source, and outputs laser radiation having a second polarization state (e.g., linear polarization with a rotated, second orientation of the plane of polarization). The optical unit 10 may be configured to change the orientation of the plane of polarization dynamically over a range of rotation angles (e.g., between 0°-180°). To this end, the optical unit may define the second polarization state by applying an electric field and/or a magnetic field through the optical medium. This field may either change the refractive index or a degree of birefringence of the optical medium based on the (e.g., Kerr or Pockels) electro-optic effect, thereby adapting the degree of rotation of linear polarized laser radiation traveling through the optical medium. As an alternative or additional measure, Faraday rotation or electrogyration may be used by applying the E-/B-field through the optical medium. This also results in a rotation of the linear polarized laser radiation traveling through the optical medium. The degree of rotation depends, among other factors, on the strength of the applied field(s) and can thus be easily and quickly adjusted without having to move any physical components such as rotating a wave plate.

The optical unit may allow switching between a plurality of pre-set polarization states as the second polarization state, which may differ from one another in their orientations of the plane of polarization or may even include non-linear polarizations (e.g., a circular polarization). The optical medium may be part of a free-space electro-optic modulator, a liquid crystal variable retarder, a Pockels cell or a Faraday rotator. A liquid crystal variable retarder may allow quickly adjusting the plane of polarization of linearly polarized laser radiation continuously over a vast range of angles while maintaining a high DOP (e.g., above 90%), whereas other solutions may only permit a switching between two predefined orientations of the plane of polarization of the linearly polarized laser radiation or may reduce the DOP (e.g., to below 90%) upon changing the orientation of the plane of polarization.

The optical medium may be arranged upstream of the scanner unit 22. In case the irradiation system 10 comprises a laser focusing unit (indicated as an optical lens in Fig. 2) and/or an optical amplifier configured to amplify laser light passing therethrough, the optical medium may also be arranged upstream of the laser focusing unit and the optical amplifier. This may enable using an optical medium suitable for low laser powers only (e.g., below 300W) and ensure that the laser radiation impinging on the raw material powder has the desired polarization state and focus position.

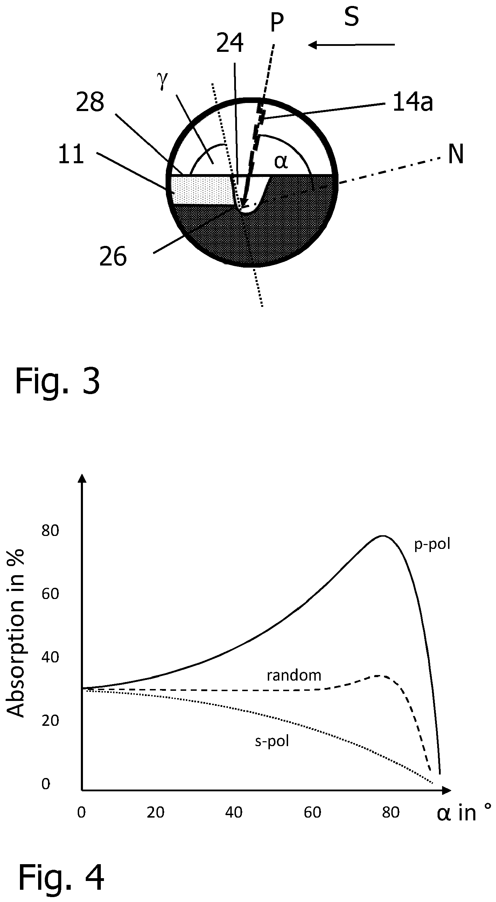

The laser energy introduced into the raw material powder by the laser beam 14a impinging onto the raw material powder layer 11 causes the raw material powder to melt and/or sinter. Specifically, a melt pool of molten raw material is generated in a region where the laser beam 14a impinges on the raw material powder. Further, a vapor capillary 24, which is illustrated in greater detail in figure 3, is formed due to the evaporation of raw material heated by the absorption of the energy of the laser beam 14a impinging on the raw material. If the laser beam 14a has a DOP below 100%, it comprises non-polarized components. These will be reflected multiple times inside the capillary 24, resulting in an enlargement of the capillary 24. Thus, the mechanical and temporal stability of the capillary 24 will be increased, and the risk of splashes of molten or raw powder material ejected out of the capillary 24 may be reduced compared with a case in which the laser beam 14a has a DOP of 100%.

The laser beam 14a penetrates into the capillary 24 and impinges on an inner wall surface 26 of the capillary 24 which has a different orientation than an upper surface 28 of the raw material powder layer 11. In the exemplary embodiment illustrated in figure 3, the surface 26 of the inner wall of the capillary onto which the laser beam impinges extends at an angle γ of approximately 75° to 80° relative to the upper surface 28 of the raw material powder layer 11 which is oriented substantially parallel to a surface of the carrier 102. As has been described above in detail, the angle γ may be determined based on a trajectory along which micro-droplets are ejected from the capillary, based on a shape and size of an outline of the capillary detected in an image thereof, based on an OCT measurement or based on a CFD simulation, for example.

In the exemplary embodiment illustrated in figure 3, the laser beam 14a is scanned across the raw material powder layer 11 in a scan direction indicated by the arrow S in a leading scan mode. A plane of incidence of the laser beam 14a on the raw material, namely on the surface 26 of the inner wall of the capillary 24, is defined by a propagation vector P of the incident laser beam 14a and a surface normal N which extends perpendicular to the raw material surface 26 onto which the incident laser beam 14a impinges. An angle of incidence α is defined between the propagation vector P of the incident laser beam 14a and the surface normal N.

During operation of the irradiation system 10, the control device 18 controls an orientation of a plane of polarization of the linearly polarized laser beam 14a (e.g., as defined by the second polarization state) in dependence on an orientation of the plane of incidence of the linearly polarized laser beam 14a on the raw material. Specifically, the control device 18 controls the orientation of the plane of polarization of the linearly polarized laser beam 14a (e.g., as defined by the second polarization state) in dependence on the orientation of the plane of incidence of the linearly polarized laser beam 14a on the inner wall surface 26 of the capillary 24.

As becomes apparent from figure 4, the orientation of the plane of polarization of the linearly polarized laser radiation relative to the plane of incidence of the linearly polarized laser radiation on the raw material has a strong influence on the absorption of the laser energy by the raw material. In a p-pol state, which is defined by the orientation of the plane of polarization of the linearly polarized laser beam 14a being parallel to the orientation of the plane of incidence of the linearly polarized laser radiation on the raw material, the absorption of the laser energy by the raw material is higher than the absorption of the laser energy by the raw material in a s-pol state, which is defined by the orientation of the plane of polarization of the linearly polarized laser beam 14a being perpendicular to the orientation of the plane of incidence of the linearly polarized laser radiation on the raw material. In the p-pol state, the absorption of laser energy by the raw material is also higher than the absorption of the energy of a random polarized laser beam. Therefore, the control device 18 controls the orientation of the plane of polarization of the linearly polarized laser beam 14a (e.g., by controlling the second polarization state) and, optionally, the DOP of the linearly polarized laser beam 14a in dependence on the orientation of the plane of incidence of the linearly polarized laser beam 14a on the raw material such that the plane of polarization is oriented substantially parallel to the plane of incidence, i.e. such that a p-pol state is reached.

A change of the scan direction S of the laser beam 14a across the raw material powder layer 11 leads to a change of the orientation of the plane of incidence of the linearly polarized laser beam 14a on the raw material. Therefore, the control device 18, upon controlling the orientation of the plane of polarization of the linearly polarized laser beam 14a in dependence on the orientation of the plane of incidence of the linearly polarized laser beam 14a on the raw material, updates at least one of (i) the second polarization state of the laser beam 14a, (ii) the DOP of the linearly polarized laser beam 14a and (iii) the orientation of the plane of polarization of the linearly polarized laser beam 14a in dependence on the scan direction S of the linearly polarized laser beam 14a across the raw material powder layer 11.

In the exemplary arrangement of figure 2, the updating of the orientation of the plane of polarization of the linearly polarized laser beam 14a is achieved by appropriately rotating the polarization device 20. The control device 18 performs the updating of at least one of (i) the second polarization state of the laser beam 14a, (ii) the DOP of the linearly polarized laser beam 14a and (iii) the orientation of the plane of polarization of the linearly polarized laser beam 14a based on an analysis of a scan pattern according to which the linearly polarized laser beam 14a is directed across the raw material powder layer 11. The analysis of the scan pattern may be performed prior to starting the production of the three-dimensional work piece 110 and/or in situ during the production of the three-dimensional work piece 110.

In order to simplify the updating of the at least one of (i) the second polarization state of the laser beam 14a, (ii) the DOP of the linearly polarized laser beam 14a and (iii) the orientation of the plane of polarization of the linearly polarized laser beam 14a, the linearly polarized laser 14a is scanned across the raw material powder layer 11 according to a scan strategy, wherein a plurality of scan vectors pointing in a first direction are successively scanned, before at least one scan vector pointing in a second direction which differs from the first direction is scanned. Such a scan strategy may reduce the number of changes of the scan direction S and hence the number of updates of the orientation of the plane of polarization of the linearly polarized laser beam 14a, and may alternatively or additionally reduce the number of adjustments by the optical unit 16a which have to be performed to update the DOP of the linearly polarized laser beam 14a.

Figure 4 further illustrates that the absorption of the energy of the linearly polarized laser radiation by the raw material strongly depends on the angle of incidence α of the laser beam 14a on the raw material. The angle of incidence α in turn depends on an angle of deflection of the incident laser beam 14a relative to a surface normal extending perpendicular to the upper surface 28 of the raw material powder layer 11 and hence an operational state of the scanner unit 22. In addition, the angle of incidence α depends on the orientation of the raw material surface 26 onto which the incident laser beam 14a impinges. In the p-pol state and at least for angles of incidence α between approximately 10° and 80°, the absorption increases with an increasing angle of incidence α. The relationship between absorption, angle of incidence and polarization may also be material-dependent and temperaturedependent.

In order to allow a particularly reliable control of the absorption of laser energy by the raw material, the control device 18, upon controlling the operation of the irradiation system 10, besides the angle of incidence α of the linearly polarized laser beam 14a, also considers a number of further process parameters that may influence the absorption of the laser energy by the raw material. Specifically, the control device 18 controls at least one of a power, a focus diameter and a focus shape of the linearly polarized laser beam 14a and/or at least one of the scan speed, the scan mode, the scan direction S and the scan pattern according to which the linearly polarized laser beam 14a is directed across the raw material powder layer 11 and/or at least one parameter of the gas flow directed across the raw material powder layer 11 in dependence on the angle of incidence α of the linearly polarized laser beam 14a on the raw material.

The laser beam source 12b and the optical unit 16b may be of the same design as the laser beam source 12a and the optical unit 16a, such that also the laser beam 14b is a linearly polarized laser beam 14b. In such a case, the control device 18 controls the operation of the irradiation system 10 in such a manner that the linearly polarized laser beams 14a, 14b are scanned across an overlap section of the raw material powder layer 11 according to a scan strategy, wherein all scan vectors are scanned according to the same scan mode. In particular, in the overlap section of the raw material powder layer 11, all scan vectors are scanned either according to a trailing scan mode or according to a leading scan mode in order to eliminate influences of the scan mode on the absorption of laser energy by the raw material.

It is, however, also conceivable that the laser beam source 12b and the optical unit 16b are configured to emit a randomized laser beam 14b, radially polarized laser beam 14b and/or an azimuthally polarized laser beam 14b. In such a case, a first section of the raw material powder layer 11 may be selectively irradiated with linearly polarized laser radiation (e.g., having a DOP of no more than 99% and no less than 30%) and a second section of the raw material powder layer 11 may be selectively irradiated with randomized laser radiation (e.g., having a DOP of 0%, 10% or 15%), radially polarized laser radiation and/or azimuthally polarized laser radiation. Specifically, the first section of the raw material powder layer 11 may be a hatch section of a work piece layer generated by selectively irradiating the raw material powder layer 11 and the second section of the raw material powder layer 11 may be a contour section of a work piece layer generated by selectively irradiating the raw material powder layer 11.

The present disclosure provides for the following Examples, in which reference signs placed in parentheses are not be understood as limiting the Examples to the specific embodiments described above with reference to the figures:
Example 1. A method of operating an irradiation system (10) for irradiating layers of a raw material powder with laser radiation in order to produce a three-dimensional work piece (110), wherein at least a section of a raw material powder layer (11) applied onto a carrier (102) is selectively irradiated with linearly polarized laser radiation having a degree of polarisation, DOP, (e.g., of no more than 99% and no less than 30%) and wherein an orientation of a plane of polarization of the linearly polarized laser radiation is controlled in dependence on an orientation of a plane of incidence of the linearly polarized laser radiation on the raw material.
Example 2. The method of Example 1,
   wherein the orientation of the plane of polarization of the linearly polarized laser radiation is controlled in dependence on the orientation of the plane of incidence of the linearly polarized laser radiation on the raw material such that the plane of polarization is oriented substantially parallel to the plane of incidence.
Example 3. The method of Example 1 or 2,
   wherein the DOP of the linearly polarized laser radiation is controlled in dependence on the orientation of the plane of incidence of the linearly polarized laser radiation on the raw material.
Example 4. The method of any one of Examples 1 to 3,
   wherein at least one of (i) the DOP of the linearly polarized laser radiation and (ii) the orientation of the plane of polarization of the linearly polarized laser radiation is controlled in dependence on the orientation of the plane of incidence of the linearly polarized laser radiation on an inner wall surface (26) of a capillary (24) extending from a surface (28) of the raw material powder layer (11) into a volume of the raw material powder layer (11) and being formed due to an interaction of the linearly polarized laser radiation with the raw material.
Example 5. The method of any one of Examples 1 to 4,
   wherein, upon controlling the orientation of the plane of polarization of the linearly polarized laser radiation in dependence on the orientation of the plane of incidence of the linearly polarized laser radiation on the raw material, at least one of (i) the DOP of the linearly polarized laser radiation and (ii) the orientation of the plane of polarization of the linearly polarized laser radiation is updated in dependence on a scan direction (S) of the linearly polarized laser radiation across the raw material powder layer (11).
Example 6. The method of Example 5,
   wherein the at least one of (i) the DOP of the linearly polarized laser radiation and (ii) the orientation of the plane of polarization of the linearly polarized laser radiation is updated based on an analysis of a scan pattern according to which the beam (14a, 14b) of linearly polarized laser radiation is directed across the raw material powder layer (11), wherein the analysis of the scan pattern is performed prior to starting the production of the three-dimensional work piece (110) and/or in situ during the production of the three-dimensional work piece (110).
Example 7. The method of any one of Examples 1 to 6,
   wherein at least one of the DOP, a power, a focus diameter and a focus shape of a beam (14a, 14b) of linearly polarized laser radiation and/or at least one of a scan speed, a scan direction (S), a scan mode and a scan pattern according to which the beam (14a, 14b) of linearly polarized laser radiation is directed across the raw material powder layer (11) and/or at least one parameter of a gas flow directed across the raw material powder layer (11) is controlled in dependence on an angle of incidence (α) of the beam (14a, 14b) of linearly polarized laser radiation on the raw material.
Example 8. The method of any one of Examples 1 to 7,
   wherein the linearly polarized laser radiation has a DOP equal to or lower than a first threshold, wherein the first threshold is one of 99%, 98%, 97%, 96% or 95%.
Example 9. The method of any one of Examples 1 to 8,
   wherein the linearly polarized laser radiation has a DOP equal to or higher than a second threshold, wherein the second threshold is one of 30%, 60%, 75%, 85%, 90% or 95%.
Example 10. The method according to Examples 8 and 9,
   wherein the first threshold is 99% and the second threshold is 85%.
Example 11. The method of Example 10,
   wherein the raw material powder is a metallic powder.
Example 12. The method of any one of Examples 1 to 11,
   wherein the DOP of the linearly polarized laser radiation is set or controlled in dependence on one or more of (i) a type of the raw material, (ii) an intensity of the laser radiation, (iii) a scan speed with which a beam (14a, 14b) of the linearly polarized laser radiation is moved across the raw material powder layer (11).
Example 13. The method of any one of Examples 1 to 12,
   wherein the DOP of the linearly polarized laser radiation is defined or adjusted by one or more optical elements arranged in a path of laser radiation emitted by a laser beam source of the irradiation system (10).
Example 14. The method of Example 13,
   wherein the one or more optical elements comprise a deflection mirror reducing the DOP of incident light upon reflection thereof.
Example 15. The method of any one of Examples 1 to 14,
   wherein a beam (14a, 14b) of linearly polarized laser radiation is scanned across the raw material powder layer (11) according to a scan strategy, wherein a plurality of scan vectors pointing in a first vector direction are successively scanned, before at least one scan vector pointing in a second vector direction which differs from the first vector direction is scanned.
Example 16. The method of any one of Examples 1 to 15,
   wherein a first section of the raw material powder layer (11) is selectively irradiated with the linearly polarized laser radiation (e.g., having the DOP of no more than 99% and no less than 30%), and a second section of the raw material powder layer (11) is selectively irradiated with randomized laser radiation, radially polarized laser radiation and/or azimuthally polarized laser radiation.
Example 17. The method of Example 16,
   wherein the first section of the raw material powder layer (11) is a hatch section of a work piece layer generated by selectively irradiating the raw material powder layer (11) and/or wherein the second section of the raw material powder layer (11) is a contour section of a work piece layer generated by selectively irradiating the raw material powder layer (11).
Example 18. The method of any one of Examples 1 to 17,
   wherein a plurality of beams (14a, 14b) of linearly polarized laser radiation are scanned across an overlap section of the raw material powder layer (11) according to a scan strategy, wherein all scan vectors are scanned according to the same scan mode.
Example 19. The method according to any one of examples 1 to 18, wherein the orientation of the plane of polarization of the linearly polarized laser radiation is controlled based on an electric field and/or a magnetic field through an optical medium (e.g., in an optical path of laser radiation).
Example 20. The method of Example 19, wherein the orientation of the plane of polarization of the linearly polarized laser radiation is controlled by applying the electric field and/or the magnetic field through the optical medium.
Example 21. The method of Example 19 or 20, wherein the irradiation system (10) comprises an optical unit configured to receive laser radiation having a first polarization state and to output laser radiation having a second polarization state, wherein the optical unit comprises the optical medium.
Example 22. The method of any one of Examples 1 to 21, wherein the orientation of the plane of polarization is dynamically controlled over a range of angles of rotation.
Example 23. An irradiation system (10) for irradiating layers of a raw material powder with laser radiation in order to produce a three-dimensional work piece (110), wherein the irradiation system (10) is configured to selectively irradiate at least a section of a raw material powder layer (11) applied onto a carrier (102) with linearly polarized laser radiation having a degree of polarisation, DOP, (e.g., of no more than 99% and no less than 30%) and wherein the irradiation system (10) comprises a control device (18) which is configured to control an orientation of a plane of polarization of the linearly polarized laser radiation in dependence on an orientation of a plane of incidence of the linearly polarized laser radiation on the raw material.
Example 24. The irradiation system (10) of Example 23,
   wherein the control device (18) is configured:
   - to control the orientation of the plane of polarization of the linearly polarized laser radiation in dependence on the orientation of the plane of incidence of the linearly polarized laser radiation on the raw material such that the plane of polarization is oriented substantially parallel to the plane of incidence; and/or
   - to control the DOP of the linearly polarized laser radiation in dependence on the orientation of the plane of incidence of the linearly polarized laser radiation on the raw material; and/or
   - to control at least one of (i) the DOP of the linearly polarized laser radiation and (ii) the orientation of the plane of polarization of the linearly polarized laser radiation in dependence on the orientation of the plane of incidence of the linearly polarized laser radiation on an inner wall surface (26) of a capillary (24) extending from a surface (28) of the raw material powder layer (11) into a volume of the raw material powder layer (11) and being formed due to an interaction of the linearly polarized laser radiation with the raw material.
Example 25. The irradiation system (10) of Example 23 or 24,
   wherein the control device (18), upon controlling the orientation of the plane of polarization of the linearly polarized laser radiation in dependence on the orientation of the plane of incidence of the linearly polarized laser radiation on the raw material, is configured to update at least one of (i) the DOP of the linearly polarized laser radiation and (ii) the orientation of the plane of polarization of the linearly polarized laser radiation in dependence on a scan direction of the linearly polarized laser radiation across the raw material powder layer (11).
Example 26. The irradiation system (10) of Example 25,
   wherein the control device (18) is configured to update at least one of (i) the DOP of the linearly polarized laser radiation and (ii) the orientation of the plane of polarization of the linearly polarized laser radiation based on an analysis of a scan pattern according to which the beam (14a, 14b) of linearly polarized laser radiation is directed across the raw material powder layer (11), wherein the analysis of the scan pattern is performed prior to starting the production of the three-dimensional work piece (110) and/or in situ during the production of the three-dimensional work piece (110).
Example 27. The irradiation system (10) of any one of Examples 23 to 26,
   wherein the control device (18) is configured to control at least one of the DOP, a power, a focus diameter and a focus shape of a beam (14a, 14b) of linearly polarized laser radiation and/or at least one of a scan speed, a scan direction, a scan mode and a scan pattern according to which the beam (14a, 14b) of linearly polarized laser radiation is directed across the raw material powder layer (11) and/or at least one parameter of a gas flow directed across the raw material powder layer (11) in dependence on an angle of incidence (α) of the beam (14a, 14b) of linearly polarized laser radiation on the raw material.
Example 28. The irradiation system (10) of any one of Examples 23 to 27, wherein
   - the linearly polarized laser radiation has a DOP equal to or lower than a first threshold, wherein the first threshold is one of 99%, 98%, 97%, 96% or 95%; and/or
   - the linearly polarized laser radiation has a DOP equal to or higher than a second threshold, wherein the second threshold is one of 30%, 60%, 75%, 85%, 90% or 95%.
Example 29. The irradiation system (10) of Example 28,
   wherein the first threshold is 99% and the second threshold is 85%, wherein, optionally, the raw material powder is a metallic powder.
Example 30. The irradiation system (10) of any one of Examples 23 to 29, comprising:
   - a laser beam source; and
   - one or more optical elements arranged in a path of laser radiation emitted by the laser beam source,
   wherein the one or more optical elements are configured to define or adjust the DOP of the linearly polarized laser radiation.
Example 31. The irradiation system (10) of Example 30,
   wherein the one or more optical elements comprise a deflection mirror configured to reduce a DOP of incident light upon reflection thereof.
Example 32. The irradiation system (10) of any one of Examples 23 to 31, wherein the control device (18) is configured:
   - to control a scanner unit (22) such that a beam (14a, 14b) of linearly polarized laser radiation is scanned across the raw material powder layer (11) according to a scan strategy, wherein a plurality of scan vectors pointing in a first vector direction are successively scanned, before at least one scan vector pointing in a second vector direction which differs from the first vector direction is scanned; and/or
   - to control the irradiation system (10) such that a first section of the raw material powder layer (11) is selectively irradiated with the linearly polarized laser radiation (e.g., having the DOP of no more than 99% and no less than 30%), and a second section of the raw material powder layer (11) is selectively irradiated with randomized laser radiation, radially polarized laser radiation and/or azimuthally polarized laser radiation, the first section of the raw material powder layer (11) in particular being a hatch section of a work piece layer generated by selectively irradiating the raw material powder layer (11) and/or the second section of the raw material powder layer (11) in particular being a contour section of a work piece layer generated by selectively irradiating the raw material powder layer (11).
Example 33. The irradiation system (10) of any one of Examples 23 to 32,
   wherein the control device (18) is configured to control a scanner unit (22) such that a plurality of beams (14a, 14b) of linearly polarized laser radiation are scanned across an overlap section of the raw material powder layer (11) according to a scan strategy, wherein all scan vectors are scanned according to the same scan mode.
Example 34. The irradiation system (10) of any one of Examples 23 to 33, comprising an optical unit configured to receive laser radiation having a first polarization state and to output laser radiation having a second polarization state, the irradiation system (10) being configured to selectively irradiate, with the laser radiation having the second polarization state, the at least a section of the raw material powder layer (11) applied onto the carrier (102), wherein the optical unit comprises an optical medium and is configured to define the second polarization state based on an electric field and/or a magnetic field through the optical medium.
Example 35. The irradiation system (10) of Example 34, wherein the orientation of the plane of polarization of the linearly polarized laser radiation is associated with or defined by the second polarization state.
Example 36. The irradiation system (10) of Example 34 or 35, wherein the control device is configured to control the orientation of the plane of polarization of the linearly polarized laser radiation based on the electric field and/or a magnetic field through the optical medium.
Example 37. The irradiation system (10) of any one of Examples 34 to 36, wherein
   the optical medium is configured such that at least one of (i) a refractive index of the optical medium and (ii) a degree of birefringence of the optical medium depends on the electric field and/or the magnetic field.
Example 38. The irradiation system (10) of any one of Examples 34 to 37, wherein
   the optical medium is configured to exhibit an electro-optic effect, wherein, optionally, the electro-optical effect corresponds to the Kerr electro-optic effect or to the Pockels electro-optic effect.
Example 39. The irradiation system (10) of any one of Examples 34 to 38, wherein
   the optical unit is configured to apply the electric field or the magnetic field in parallel to a travel direction of laser light through the optical medium.
Example 40. The irradiation system (10) of Example 39, wherein
   the optical unit is configured to use Faraday rotation or electrogyration to define the second polarization state.
Example 41. The irradiation system (10) of any one of Examples 34 to 40, wherein
   the optical unit comprises at least one of the following components including the optical medium:
   an electro-optic modulator;
   a voltage-controlled wave plate;
   a liquid crystal variable retarder;
   a Pockels cell;
   a Faraday rotator.
Example 42. The irradiation system (10) of any one of Examples 34 to 41, wherein
   the irradiation system comprises at least one component arranged, together with the optical medium, in an optical path of laser radiation, the at least one component being selected from (i) a laser focusing unit, (ii) a scanner unit, and (iii) an optical amplifier, wherein the optical medium is arranged, relative to a travel direction of laser radiation along the optical path, upstream of one or more of the at least one component.
Example 43. The irradiation system (10) of any one of Examples 34 to 42, wherein
   the second polarization corresponds to one of a plurality of pre-set polarization states that can be defined by the optical unit.
Example 44. The irradiation system (10) of Example 43, wherein
   the plurality of pre-set polarization states comprises at least two of the following:
   a linear polarization with a plane of polarization having a first unique orientation;
   a linear polarization with a plane of polarization having a second unique orientation;
   a linear polarization with a plane of polarization having a third unique orientation;
   a circular polarization.
Example 45. The irradiation system (10) of any one of Examples 34 to 44, wherein
   the control device (18) is configured to control the optical unit.
Example 46. The irradiation system (10) of any one of Examples 34 to 45, wherein
   the control device (18) is configured to control, in dependence on an orientation of a plane of incidence of the laser radiation on the raw material, the second polarization state defined by the optical unit and/or a plane of polarization of the laser radiation output by the optical unit.
Example 47. The irradiation system (10) of any one of Examples 34 to 46, wherein
   the control device (18) is configured to control the irradiation system (10) such that a first section of the raw material powder layer (11) is selectively irradiated with linearly polarized laser radiation, and a second section of the raw material powder layer (11) is selectively irradiated with circular polarized laser radiation, the first section of the raw material powder layer (11) in particular being a hatch section of a work piece layer generated by selectively irradiating the raw material powder layer (11) and/or the second section of the raw material powder layer (11) in particular being a contour section of a work piece layer generated by selectively irradiating the raw material powder layer (11).
Example 48. Apparatus (100) for producing a three-dimensional work piece (110), the apparatus comprising the irradiation system of any one of Examples 23 to 47.

## Claims

1. An irradiation system (10) for irradiating layers of a raw material powder with laser radiation to produce a three-dimensional work piece (110), the irradiation system (10) comprising an optical unit configured to receive laser radiation having a first polarization state and to output laser radiation having a second polarization state, wherein the irradiation system (10) is configured to selectively irradiate, with the laser radiation having the second polarization state, at least a section of a raw material powder layer (11) applied onto a carrier (102), wherein the optical unit comprises an optical medium and is configured to define the second polarization state based on an electric field and/or a magnetic field through the optical medium.

2. The irradiation system (10) of claim 1, wherein
the optical medium is configured such that at least one of (i) a refractive index of the optical medium and (ii) a degree of birefringence of the optical medium depends on the electric field and/or the magnetic field.

3. The irradiation system (10) of claim 1 or 2, wherein
the optical medium is configured to exhibit an electro-optic effect, wherein, optionally, the electro-optical effect corresponds to the Kerr electro-optic effect or to the Pockels electro-optic effect.

4. The irradiation system (10) of any one of claims 1 to 3, wherein
the optical unit is configured to apply the electric field or the magnetic field in parallel to a travel direction of laser light through the optical medium.

5. The irradiation system (10) of any one of claims 1 to 4, wherein
the optical unit is configured to use Faraday rotation or electrogyration to define the second polarization state.

6. The irradiation system (10) of any one of claims 1 to 5, wherein
the optical unit comprises at least one of the following components including the optical medium:
an electro-optic modulator;
a voltage-controlled wave plate;
a liquid crystal variable retarder;
a Pockels cell;
a Faraday rotator.

7. The irradiation system (10) of any one of claims 1 to 6, wherein
the irradiation system comprises at least one component arranged, together with the optical medium, in an optical path of laser radiation, the at least one component being selected from (i) a laser focusing unit, (ii) a scanner unit, and (iii) an optical amplifier, wherein the optical medium is arranged, relative to a travel direction of laser radiation along the optical path, upstream of one or more of the at least one component.

8. The irradiation system (10) of any one of claims 1 to 7, wherein
the second polarization corresponds to one of a plurality of pre-set polarization states that can be defined by the optical unit.

9. The irradiation system (10) of claim 8, wherein
the plurality of pre-set polarization states comprises at least two of the following:
a linear polarization with a plane of polarization having a first unique orientation;
a linear polarization with a plane of polarization having a second unique orientation;
a linear polarization with a plane of polarization having a third unique orientation;
a circular polarization.

10. The irradiation system (10) of any one of claims 1 to 9, wherein
the irradiation system (10) comprises a control device (18) configured to control the optical unit.

11. The irradiation system (10) of claim 10, wherein
the control device (18) is configured to control, in dependence on an orientation of a plane of incidence of the laser radiation on the raw material, the second polarization state defined by the optical unit and/or a plane of polarization of the laser radiation output by the optical unit.

12. The irradiation system (10) of claim 10 or 11, wherein
the control device (18) is configured to control the irradiation system (10) such that a first section of the raw material powder layer (11) is selectively irradiated with linearly polarized laser radiation, and a second section of the raw material powder layer (11) is selectively irradiated with circular polarized laser radiation, the first section of the raw material powder layer (11) in particular being a hatch section of a work piece layer generated by selectively irradiating the raw material powder layer (11) and/or the second section of the raw material powder layer (11) in particular being a contour section of a work piece layer generated by selectively irradiating the raw material powder layer (11).

13. An apparatus (100) for producing a three-dimensional work piece (110), the apparatus (100) comprising the irradiation system (10) of any one of claims 1 to 12.

14. A method of operating an irradiation system (10) for irradiating layers of a raw material powder with laser radiation to produce a three-dimensional work piece (110), the irradiation system (10) comprising an optical unit configured to receive laser radiation having a first polarization state and to output laser radiation having a second polarization state, wherein at least a section of a raw material powder layer (11) applied onto a carrier (102) is selectively irradiated with the laser radiation having the second polarization state, wherein optical unit comprises an optical medium and the second polarization state is defined based on an electric field and/or a magnetic field through the optical medium.

15. The method of claim 14, wherein
the second polarization state and/or a plane of polarization of the laser radiation output by the optical unit is controlled in dependence on an orientation of a plane of incidence of the laser radiation on the raw material.
